# FASCICULE DE BREVET EUROPEEN

(11) **EP 2 435 762 B1**
(45) Date de publication et mention de la délivrance du brevet: **07.12.2016**
(21) Numéro de dépôt: 10715945.1
(22) Date de dépôt: 16.03.2010
(51) Int. Cl.: C02F 9/00, F28D 1/03, F28D 1/047, C02F 1/00, F28D 1/02, F24D 17/02, F24H 9/00, F24D 11/02, F24D 17/00, F28D 21/00

(54) **DISPOSITIF DE RÉCUPÉRATION DE CHALEUR À PARTIR D'EAUX USÉES, SYSTÈME THERMIQUE COMPRENANT UN TEL DISPOSITIF ET PROCÉDÉ**
VORRICHTUNG ZUR WÄRMERÜCKGEWINNUNG AUS ABWASSER, THERMISCHES SYSTEM MIT EINER DERARTIGEN VORRICHTUNG UND VERFAHREN
DEVICE FOR RECOVERING HEAT FROM WASTE WATER, THERMAL SYSTEM INCLUDING SUCH A DEVICE, AND METHOD

(30) Priorité: 26.05.2009 FR 0953454
(43) Date de publication de la demande: 04.04.2012
(73) Titulaire: Moure, Alain, 77000 Melun (FR)
(72) Inventeur: Moure, Alain, 77000 Melun (FR)
(74) Mandataire: Lavoix
(86) Numéro de dépôt international: PCT/FR2010/050467
(87) Numéro de publication internationale: WO 2010/136681

(56) Documents cités:
- EP-A1- 0 174 554
- WO-A1-2006/024093
- DE-A1- 2 625 157

## Description

La présente invention concerne un dispositif de récupération de chaleur des eaux usées, du type comprenant une cuve de rétention des eaux usées et un échangeur de chaleur comprenant au moins une plaque d'échange de chaleur comprenant deux faces opposées et une canalisation interne de circulation d'un fluide caloporteur entre les deux faces.

De tels dispositifs de récupération de chaleur sont utilisés par exemple dans un système thermique à pompe à chaleur pour apporter la chaleur récupérée des eaux usées au fluide frigorigène de la pompe à chaleur et ainsi améliorer le rendement de celle-ci.

DE 32 14 357 décrit un dispositif de ce type comprenant des plaques d'échange de chaleur cylindriques, disposées de manière concentrique, de façon que les eaux usées circulent radialement de l'intérieur vers l'extérieur en passant alternativement au-dessus et au-dessous des plaques.

EP 0 174 554 divulgue un dispositif de récupération de chaleur des eaux usées comprenant des plaques d'échange de chaleur plongeant dans une cuve.

EP 0 174 554 divulgue le préambule de la revendication 1.

Un but de l'invention est de proposer un dispositif de récupération de chaleur simple permettant une récupération efficace de chaleur sans perturber l'écoulement des eaux usées.

A cet effet, l'invention propose un dispositif de récupération de chaleur selon la revendication 1. Des modes de réalisation particuliers figurent aux revendications 2 à 6.

L'invention concerne également un système thermique selon la revendication 7.

L'invention concerne encore un procédé de récupération de chaleur à partir d'eaux usées selon la revendication 8.

L'invention et ses avantages seront mieux compris à la lecture de la description qui va suivre, donnée uniquement à titre d'exemple, et faite en référence aux dessins annexés, sur lesquels :
- la figure 1 est une vue schématique d'un système de chauffage à pompe à chaleur intégrant un dispositif de récupération de chaleur selon l'invention ;
- la figure 2 est une vue en coupe longitudinale du dispositif de récupération de chaleur selon II-II sur la figure 3 ; et
- la figure 3 est une vue en coupe transversale du dispositif de récupération de chaleur selon II-II sur la figure 2.

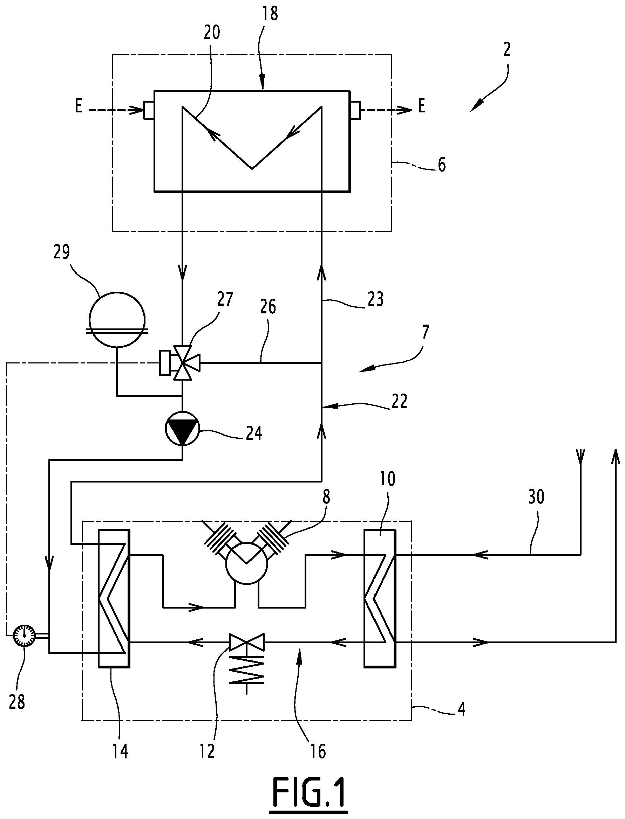

Le système thermique 2 illustré sur la figure 1 comprend une pompe à chaleur 4 et un dispositif de récupération de chaleur 6 pour récupérer de la chaleur à partir d'eaux usées, et un circuit de transfert 7 pour transférer la chaleur récupérer par le dispositif de récupération de chaleur à la pompe à chaleur 4.

La pompe à chaleur 4 permet de transférer de la chaleur récupérée à l'aide du dispositif de récupération de chaleur 6 vers une application nécessitant un apport de chaleur, telle qu'un système de chauffage d'une habitation, un système de chauffage d'une piscine, un système de chauffage d'eau sanitaire...

La pompe à chaleur 4 comprend un compresseur 8, un condenseur 10, un détendeur 12 et un évaporateur 14, reliés par un circuit de pompe à chaleur 16 pour la circulation d'un fluide frigorigène. Le circuit de pompe à chaleur 16 forme une boucle fermée de circulation du fluide frigorigène passant successivement dans le compresseur 8, le condenseur 10, le détendeur 12 et l'évaporateur 14 pour revenir au compresseur 8.

Le dispositif de récupération de chaleur 6 comprend une cuve 18 de rétention des eaux usées et un échangeur 20 de chaleur disposé dans la cuve 18.

La cuve 18 se situe dans un circuit d'évacuation des eaux usées, et est traversée par les eaux usées E, provenant par exemple d'une habitation collective ou individuelle.

Le circuit de transfert 22 permet la circulation d'un fluide caloporteur. Il comprend des conduites reliant l'échangeur 20 à l'évaporateur de la pompe à chaleur 4 de façon à former une boucle fermée 23 traversant successivement l'échangeur de chaleur 20 et l'évaporateur 16, et une pompe 24 pour forcer la circulation du fluide caloporteur, disposée dans la boucle fermée 23 entre l'échangeur 20 et l'évaporateur 14.

Le circuit de transfert 22 comprend en outre une conduite de dérivation 26 pour contourner l'échangeur 20, s'alimentant dans la boucle fermée 23 entre l'évaporateur 14 et l'échangeur 20, et débouchant entre l'échangeur 20 et la pompe 24, et une vanne de commande 27 à 3 voies pour commander la circulation du fluide caloporteur dans l'échangeur 20 et/ou la conduite de dérivation 26.

Le circuit de transfert 22 comprend un capteur 28 de température disposé à l'entrée de l'évaporateur 14 pour détecter la température du fluide caloporteur entrant dans l'évaporateur 14. Le capteur 28 est relié à la vanne de commande 27 pour la commander en fonction du signal de mesure fourni par le capteur 28.

Le circuit de transfert 22 comprend un réservoir 29 de régulation raccordé à la boucle 23 entre la vanne de commande 27 et la pompe 24.

Dans l'exemple illustré, le condenseur 10 de la pompe à chaleur 4 est traversé par un circuit de chauffage 30 d'un système de chauffage d'une habitation, dans lequel circule un liquide caloporteur, par ex de l'eau. Dans d'autres applications, le condenseur 10 est traversé par un gaz, par ex. de l'air pour un système de chauffage par circulation forcée d'air chaud.

En fonctionnement normal, le fluide frigorigène de la pompe à chaleur 4 circule dans le circuit de pompe à chaleur 16 sous l'effet du compresseur 8. Il traverse successivement le compresseur 8 dans lequel il se réchauffe en étant comprimé, le condenseur 10 dans lequel il cède des calories à une source chaude (ici le fluide caloporteur du circuit de chauffage 30), le détendeur 12 dans lequel il se détend en se refroidissant, puis l'évaporateur 14 dans lequel il récupère des calories provenant d'une source froide (ici les calories récupérées par le dispositif de récupération de chaleur 6 et transférées par le circuit de transfert 22).

En fonctionnement normal (conduite de dérivation fermée), le fluide caloporteur du circuit de récupération de chaleur 22 circule sous l'effet de la pompe 24 en traversant successivement l'échangeur de chaleur 20 dans lequel il prend des calories aux eaux usées, puis l'évaporateur 14 dans lequel il cède des calories au fluide frigorigène du circuit de pompe à chaleur 16. Le fluide caloporteur du circuit de chauffage 30 circule dans le condenseur 10 en prenant des calories au fluide frigorigène du circuit de pompe à chaleur 16.

La vanne de commande 27 est commandée en fonction de la température en entrée de l'évaporateur 14 de façon qu'une partie du fluide caloporteur by-passe l'échangeur 20 pour maintenir la température du fluide caloporteur en entrée de l'évaporateur 14 dans une plage de température permettant un fonctionnement satisfaisant de la pompe à chaleur 4, par exemple une température comprise entre 23°C et 25°C.

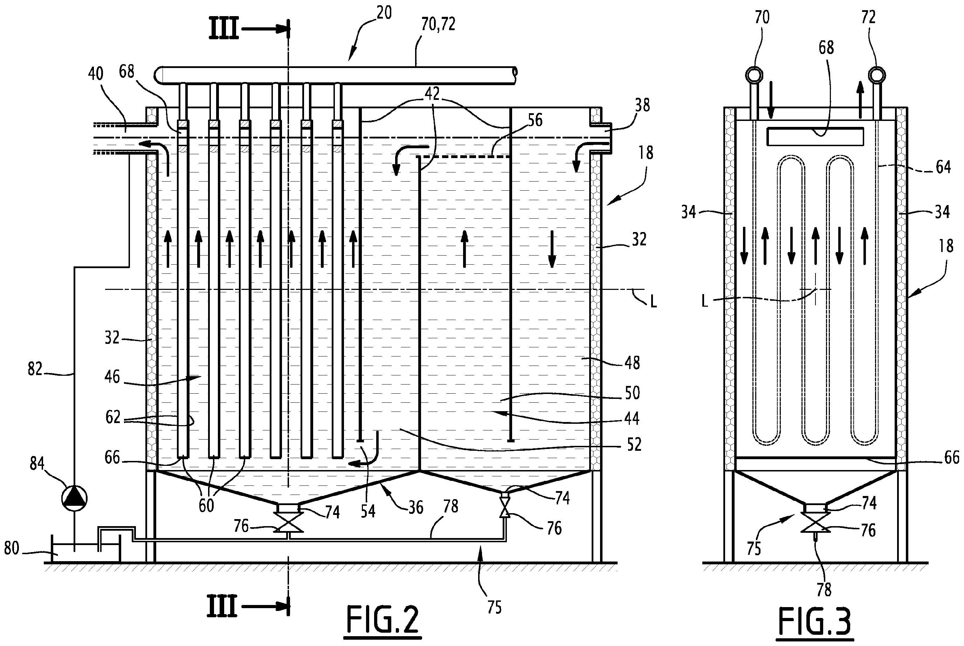

Tel qu'illustré sur les figures 2 et 3, la cuve 18 présente une forme générale parallélépipédique. Elle comprend deux parois d'extrémités 32 (figure 2) espacées suivant une direction longitudinale L et s'étendant transversalement, deux parois latérales 34 (figure 3) espacées transversalement et sensiblement parallèles à la direction longitudinale et un fond 36, délimitant un volume intérieur de la cuve 18.

Dans la suite de la description, les termes « haut », « bas » et « vertical » s'entendent par rapport à la cuve en position d'utilisation, telle que représentée sur les figures 2 et 3. La direction longitudinale L est sensiblement horizontale.

La cuve 18 comprend une entrée 38 pour les eaux usées disposée sur une paroi d'extrémité 32, et une sortie 40 pour les eaux usées disposées sur l'autre paroi d'extrémité 32. L'entrée 38 et la sortie 40 sont situées en partie haute de la cuve 18, i.e. à proximité des bords supérieurs des parois d'extrémité 32.

La cuve 18 comprend des chicanes 42 disposées transversalement entre les parois latérales 34 et délimitant dans la cuve 18 un compartiment de décantation 44 des eaux usées et un compartiment d'échange de chaleur 46, traversés successivement par les eaux usées. Le compartiment d'échange de chaleur 46 est disposé en aval du compartiment de décantation 44 dans le sens de circulation des eaux usées entre l'entrée 38 et la sortie 40.

Le compartiment de décantation 44 comprend un siphon de décantation formé par deux chicanes 42, délimitant un tronçon descendant 48 s'étendant depuis l'entrée 38 vers le fond 36 et un tronçon montant 50 remontant depuis le fond 36 vers le haut de la cuve 18.

Le compartiment de décantation 44 comprend un tronçon de sortie 52 formé par une troisième chicane 42 et descendant depuis le tronçon montant 50 du siphon vers une entrée 54 du compartiment d'échange de chaleur 44 située en partie basse, adjacente au fond 36.

La cuve 18 comprend un filtre 56 s'étendant en travers du tronçon montant 50 du siphon, à proximité de l'extrémité supérieure de celui-ci.

L'échangeur 20 est disposé dans le compartiment d'échange de chaleur 46. Il comprend un groupe de plaques d'échange 60, présentant chacune une forme sensiblement plane et parallélépipédique. Chaque plaque 60 comprend deux faces opposées 62 (figure 2) et une canalisation interne 64 (figure 3) de circulation du fluide caloporteur, serpentant entre les faces opposées 62.

Chaque plaque d'échange 60 possède un bord inférieur 66 espacé du fond 36, et une ouverture supérieure 68 pour la circulation des eaux usées au travers de la plaque.

Chaque plaque d'échange 60 s'étend sensiblement verticalement et transversalement entre les parois latérales 34. Telle qu'illustrée sur la figure 3, chaque plaque d'échange 60 a ses bords latéraux en contact avec les parois latérales 34.

Les plaques d'échanges 60 sont espacées les unes des autres, et définissent entre elles et avec la paroi d'extrémité 32 et la chicane 42 délimitant le compartiment d'échange de chaleur 46 des passages de circulation des eaux usées en parallèles depuis l'entrée 54 du compartiment d'échange de chaleur 46 vers la sortie de celui-ci, située en partie haute, et qui est ici la sortie 40 de la cuve 18.

L'échangeur 20 comprend une conduite d'alimentation 70 par laquelle le fluide caloporteur arrive, et une conduite d'évacuation 72 par lequel le fluide caloporteur repart. La canalisation interne 64 de chacune des plaques d'échange 60 disposées dans le même compartiment d'échange de chaleur 46 s'alimente dans la conduite d'alimentation 70 et débouche dans la conduite d'évacuation 72. Ainsi, les canalisations internes 64 des plaques d'échange 60 disposées dans le même compartiment d'échange de chaleur 46 sont reliées de manière fluidique en parallèle pour la circulation d'un fluide caloporteur.

Le fond 36 comprend des ouvertures de vidange 74, l'une au fond du compartiment de décantation 44 et l'autre au fond du compartiment d'échange 46.

La cuve 18 comprend un circuit de vidange 75 pour récupérer les dépôts éventuels au fond de la cuve 18 par les ouvertures de vidange 74 et réinjecter les eaux usées prélevée avec les dépôts en aval de la cuve 18. Le circuit de vidange comprend une vanne 76 de commande de chaque ouverture de vidange 74, une canalisation d'évacuation 78 reliant les ouvertures d'évacuation 74 à un réservoir de stockage 80, une conduite de retour 82 reliant le réservoir de stockage 80 à la sortie 40, et une pompe 84 disposée sur la conduite de retour 82.

En fonctionnement, les eaux usées arrivent dans la cuve 18 par son entrée 38 avec un flux plus ou moins régulier. Elles circulent au travers de la cuve 18 par effet de siphon provoqué par les chicanes 42. Elles circulent en premier lieu dans le compartiment de décantation 44 qui permet de créer des turbulences qui homogénéisent la température, et de décharger les eaux usées des éléments en suspension. Ceux-ci restent sous la forme de dépôts sur le fond 36, dans le coude formé entre le tronçon descendant 48 et le tronçon montant 50, par gravité. Le filtre 56 permet de filtrer d'éventuels éléments résiduels.

Le tronçon de sortie 52 permet de faire redescendre les eaux usées vers le fond 36 pour arroser les plaques d'échange 60 du bas vers le haut.

Dans le compartiment d'échange 46, les eaux usées circulent sensiblement verticalement du bas vers le haut le long des deux faces opposées de chaque plaque d'échange 60, puis ressortent de la cuve 18 en circulant vers la sortie 40 au travers des ouvertures 68.

Régulièrement, l'ouverture des vannes 76 du circuit de vidange 75 permet d'évacuer les dépôts formés sur le fond 36, principalement au fond du compartiment de décantation 44, et éventuellement au fond du compartiment d'échange 46. Les dépôts sont récupérés dans le réservoir de stockage 80, les eaux usées étant réinjectées en aval de la cuve 18.

Le dispositif de récupération de chaleur 6 permet une circulation des eaux usées avec des pertes de charges limitées, sans perturber leur écoulement, et un échange de chaleur efficace entre les eaux usées et le fluide caloporteur circulant dans les plaques d'échange 60.

Le compartiment de décantation permet une homogénéisation des eaux usées et une élimination des éléments en suspension, ce qui favorise ensuite les échanges de chaleurs.

L'alimentation des canalisations internes 64 des plaques d'échange 60 et la circulation des eaux usées dans le même sens le long des deux faces de chaque plaque d'échange 60 améliorent l'efficacité de l'échangeur 20.

La forme de la cuve 18 et l'agencement des plaques d'échange 60 permet des échanges de chaleurs efficaces avec un encombrement limité. La largeur de la cuve, prise entre ses parois latérales 34, est inférieure de préférence à 90 cm, en particulier inférieure à 60 cm. Ceci facilite son installation dans des habitations individuelles, et notamment le passage de la cuve 18 dans les portes.

En option, la cuve peut comprendre plusieurs compartiments d'échange disposés en parallèle ou en série, l'échangeur de chaleur comprenant un groupe de plaques d'échange plongeant dans chaque compartiment d'échange.

Le dispositif de récupération de chaleur peut être utilisé pour un apport de chaleur à une pompe à chaleur ou à tout autre type de système de production de chaleur.

## Revendications

1. Dispositif de récupération de chaleur (6) à partir d'eaux usées, comprenant une cuve (18) de rétention des eaux usées présentant une forme générale parallélépipédique, et un échangeur (20) de chaleur comprenant au moins une plaque (60) d'échange de chaleur comprenant deux faces (62) opposées et une canalisation interne (64) de circulation d'un fluide caloporteur entre les deux faces (62), la ou chaque plaque (60) étant disposée dans un compartiment d'échange de chaleur (46) de la cuve (18) de façon que les eaux usées circulent sensiblement verticalement du bas vers le haut le long des deux faces (62) opposées de la ou chaque plaque (60) entre une entrée (54) du compartiment d'échange de chaleur (46) située en partie basse et une sortie (40) du compartiment d'échange de chaleur (46) située en partie haute, le dispositif d'échange de chaleur étant **caractérisé en ce que** la cuve (18) comprend une chicane (42) pour forcer une circulation des eaux usées vers le bas vers l'entrée (54) du ou de chaque compartiment d'échange de chaleur (46).

2. Dispositif de récupération de chaleur selon la revendication 1, dans lequel l'échangeur (20) de chaleur comprend au moins un groupe de plaques (60) disposées dans un même compartiment d'échange de chaleur (46) de la cuve (18).

3. Dispositif de récupération de chaleur selon la revendication 2, dans lequel les canalisations internes (64) des plaques (60) d'un groupe de plaques disposées dans un même compartiment d'échange de chaleur (46) sont reliées de manière fluidique en parallèle pour leur alimentation en fluide caloporteur.

4. Dispositif de récupération de chaleur selon la revendication 2 ou 3, dans lequel les plaques (60) d'un groupe de plaques sont disposées parallèlement les unes aux autres, chaque paire de plaques adjacentes définissant entre leurs faces (62) en regard un passage de circulation des eaux usées.

5. Dispositif de récupération de chaleur selon l'une quelconque des revendications précédentes comprenant au moins un compartiment de décantation (44) comprenant au moins deux chicanes (42) formant un siphon en amont du compartiment d'échange de chaleur (46).

6. Dispositif de récupération de chaleur selon l'une quelconque des revendications précédentes, dans lequel la cuve (18) comprend deux parois latérales (34) sensiblement planes et parallèles délimitant entre elles un volume interne s'étendant suivant une direction longitudinale (L) entre l'entrée et la sortie de la cuve, la ou chaque plaque (60) s'étendant transversalement entre les deux parois latérales (34).

7. Système thermique comprenant une pompe à chaleur (4) comprenant un compresseur (8), un condenseur (10), un détendeur (12) et un évaporateur (14) reliés en série par un circuit de pompe à chaleur (16) pour la circulation d'un fluide frigorigène, l'évaporateur (14) étant par ailleurs relié à un dispositif de récupération de chaleur (6) selon l'une quelconque des revendications précédentes pour le transfère de la chaleur récupérée à partir des eaux usées vers le fluide frigorigène de la pompe à chaleur (4).

8. Procédé de récupération de chaleur à partir d'eaux usées mettant en oeuvre un dispositif de récupération de chaleur des eaux usées selon l'une quelconque des revendications 1 à 6.

## Patentansprüche

1. Vorrichtung zur Wärmerückgewinnung (6) aus Abwasser, umfassend einen Abwasserrückhaltebehälter (18) mit einer im Allgemeinen parallelepipedischen Form und einen Wärmetauscher (20), umfassend mindestens eine Wärmetauscherplatte (60), umfassend zwei gegenüberliegende Flächen (62) und eine innere Zirkulationskanalisation (64) eines Wärmeträgerfluids zwischen den zwei Flächen (62), wobei die oder jede Platte (60) in einem Wärmetauscherabteil (46) des Behälters (18) derart angeordnet ist, dass das Abwasser etwa vertikal von unten nach oben entlang der zwei gegenüberliegenden Flächen (62) der oder jeder Platte (60) zwischen einem Eingang (54) des Wärmetauscherabteils (46), der sich im unteren Teil befindet, und einem Ausgang (40) des Wärmetauscherabteils (46), der sich im oberen Teil befindet, zirkuliert, wobei die Wärmetauschvorrichtung **dadurch gekennzeichnet ist, dass** der Behälter (18) ein Hindernis (42) umfasst, um eine Zirkulation des Abwassers nach unten zum Eingang (54) des oder jedes Wärmetauscherabteils (46) zu erzwingen.

2. Vorrichtung zur Wärmerückgewinnung nach Anspruch 1, wobei der Wärmetauscher (20) mindestens eine Gruppe von Platten (60) umfasst, die in einem selben Wärmetauscherabteil (46) des Behälters (18) angeordnet sind.

3. Vorrichtung zur Wärmerückgewinnung nach Anspruch 2, wobei die inneren Kanalisationen (64) der Platten (60) einer Gruppe von Platten, die in einem selben Wärmetauscherabteil (46) angeordnet sind, für ihre Versorgung mit Wärmeträgerfluid fluidisch parallel verbunden sind.

4. Vorrichtung zur Wärmerückgewinnung nach Anspruch 2 oder 3, wobei die Platten (60) einer Gruppe von Platten parallel zueinander angeordnet sind, wobei jedes Paar benachbarter Platten zwischen ihren gegenüberliegenden Flächen (62) einen Abwasser-Zirkulationsdurchgang bildet.

5. Vorrichtung zur Wärmerückgewinnung nach einem der vorangehenden Ansprüche, umfassend mindestens ein Klärabteil (44), umfassend mindestens zwei Hindernisse (42), die einen Siphon vor dem Wärmetauscherabteil (46) bilden.

6. Vorrichtung zur Wärmerückgewinnung nach einem der vorangehenden Ansprüche, wobei der Behälter (18) zwei etwa ebene und parallele Seitenwände (34) umfasst, die zwischen sich ein inneres Volumen begrenzen, das sich gemäß einer Längsrichtung (L) zwischen dem Eingang und dem Ausgang des Behälters erstreckt, wobei sich die oder jede Platte (60) zwischen den zwei Seitenwänden (34) quer erstreckt.

7. Thermisches System, umfassend eine Wärmepumpe (4), umfassend einen Kompressor (8), einen Kondensator (10), einen Druckminderer (12) und einen Verdampfer (14), die mittels eines Wärmepumpenkreises (16) für die Zirkulation eines Kühlfluids in Reihe verbunden sind, wobei der Verdampfer (14) im Übrigen für den Transfer der aus dem Abwasser zurückgewonnenen Wärme zum Kühlfluid der Wärmepumpe (4) mit einer Vorrichtung zur Wärmerückgewinnung (6) nach einem der vorangehenden Ansprüche verbunden ist.

8. Verfahren zur Wärmerückgewinnung aus Abwasser, bei dem eine Vorrichtung zur Wärmerückgewinnung aus Abwasser nach einem der Ansprüche 1 bis 6 umgesetzt wird.

## Claims

1. Device (6) for recovering heat from wastewater, of the type comprising a vat (18) for holding wastewater, the vat (18) being of general parallelepiped shape, and a heat exchanger (20) comprising at least one heat exchange plate (60) having two opposite surfaces (62) and an inner pipe (64) for circulation of a heat transfer fluid between the two surfaces (62), the or each plate (60) being arranged in a heat exchange compartment (46) of the vat (18) so that the wastewater circulates substantially vertically from bottom upwards along the two opposite surfaces (62) of the or each plate (60) between an inlet (54) of the heat exchange compartment (46) located in the lower portion and an outlet (40) of the heat exchange compartment (46) located in the upper portion, the heat recovery device being **characterized in that** the vat (18) comprises a baffle (42) to force circulation of the wastewater downwards towards the inlet (54) of the or of each heat exchange compartment (46).

2. The heat recovery device according to claim 1, wherein the heat exchanger (20) comprises at least one group of plates (60) arranged in one same heat exchange compartment (46) of the vat (18).

3. The heat recovery device according to claim 2, wherein the inner pipes (64) of the plates (60) of a group of plates arranged in one same heat exchange compartment (46) are in parallel fluid connection for supplying of heat transfer fluid thereto.

4. The heat recovery device according to claim 2 or 3, wherein the plates (60) of a group of plates are arranged parallel to one another, each pair of adjacent plates defining between their opposite surfaces (62) a throughway for circulation of the wastewater.

5. The heat recovery device according to any of the preceding claims comprising at least one decanting compartment (44) having at least two baffles (42) forming a siphon upstream of the heat exchange compartment (46).

6. The heat recovery device according to any of the preceding claims, wherein the vat (18) comprises two substantially planar and parallel side walls (34) delimiting between them an inner volume extending in a longitudinal direction (L) between the inlet and the outlet of the vat, the or each plate (60) extending transversally between the two side walls (34).

7. A thermal system including a heat pump (4) comprising a compressor (8), a condenser (10), a pressure reducer (12) and an evaporator (14) connected in series by a heat pump circuit (16) for the circulation of a refrigerant, the evaporator (14) also being connected to a heat recovery device (14) according to any of the preceding claims for transfer of the heat recovered from the wastewater towards the refrigerant of the heat pump (4).

8. A method for recovering heat from wastewater implementing a wastewater heat recovery device according to any of claims 1 - 6.
